# EUROPÄISCHE PATENTSCHRIFT

(11) **EP 4 249 313 B1**
(45) Veröffentlichungstag und Bekanntmachung des Hinweises auf die Patenterteilung: **18.11.2026**
(21) Anmeldenummer: 23159413.6
(22) Anmeldetag: 01.03.2023
(51) Int. Cl.: B60L 50/20, B60L 15/20, B60L 15/30, B62K 23/08, B62M 6/45

(54) **VERFAHREN ZUM STEUERN EINER VON EINEM MOTOR EINES ELEKTRISCHEN FAHRRADES BEREITGESTELLTEN MOTORISCHEN UNTERSTÜTZUNG**
METHOD FOR CONTROLLING A MOTORISED SUPPORT PROVIDED BY A MOTOR OF AN ELECTRIC BICYCLE
PROCÉDÉ DE COMMANDE D'UN SUPPORT MOTORISÉ FOURNI PAR UN MOTEUR DE BICYCLETTE ÉLECTRIQUE

(30) Priorität: 25.03.2022 DE 102022202975
(43) Veröffentlichungstag der Anmeldung: 27.09.2023
(73) Patentinhaber: Robert Bosch GmbH, 70442 Stuttgart (DE)
(72) Erfinder: Manewald, Merlin Martin, 72764 Reutlingen (DE); Eberle, Sebastian, 72072 Tuebingen (DE); Weinmann, Matthias, 72336 Balingen (DE); Reisige, Christian, 72072 Tuebingen (DE); Reck, Joseph, 70794 Filderstadt (DE); Baumgaertner, Daniel, 72149 Neustetten (DE)

(56) Entgegenhaltungen:
- EP-A1- 0 675 037
- CN-A- 113 415 375
- DE-A1- 102020 200 198
- JP-A- H0 733 070
- US-A- 5 474 148
- US-B2- 11 014 626

## Beschreibung

### Stand der Technik

Die vorliegende Erfindung betrifft ein Verfahren zum Steuern einer von einem Motor eines elektrischen Fahrrads bereitgestellten motorischen Unterstützung.

Bei elektrischen Fahrrädern ist es notwendig, dass diese geschwindigkeitsbezogen abgeregelt werden können. So müssen solche elektrischen Fahrräder beispielsweise hinsichtlich einer maximalen Unterstützungsgeschwindigkeit abgeregelt werden. In der EU ist es beispielsweise notwendig, dass Pedelecs auf 25 km/h ohne Toleranz und S-Pedelecs auf 45 km/h abgeregelt werden. Auch ist ein Abregeln auf unterschiedliche maximale Unterstützungsgeschwindigkeiten oftmals zur Produktdifferenzierung gewünscht, wobei günstigere Antriebe beispielsweise bei einer geringeren Geschwindigkeit abgeregelt werden als Premiumantriebe.

Typischerweise wird zum Abregeln bei einer maximalen Unterstützungsgeschwindigkeit die maximal zulässige Motorunterstützung, beispielsweise das Motordrehmoment, die Leistung des Motors, und/oder das Unterstützungsverhältnis mit zunehmender Geschwindigkeit reduziert. Dabei wird beispielsweise in einem Geschwindigkeitsintervall von 20 km/h bis 25 km/h das maximal von dem Motor des Fahrrads zur Verfügung gestellte Drehmoment von einem vollen Drehmoment auf ein Drehmoment von 0 reduziert. Im einfachsten Fall wird dazu eine einfache lineare Interpolation verwendet.

Die Schwierigkeit bei einer Abregelung ist es, dass dies einerseits für den Fahrer möglichst angenehm und unmerklich erfolgen soll. Daher ist eine breite Rampe und somit ein weites Geschwindigkeitsintervall zur Abregelung vorteilhaft. Dabei ist ebenfalls zu beachten, dass schnelle Schwankungen der Motorunterstützung auch am Fuß des Fahrers als störend wahrgenommen werden können. Umgekehrt ist es jedoch auch wünschenswert, dass auch nahe der maximal zulässigen Endgeschwindigkeit weiterhin eine Unterstützung durch den Motor erfolgt. Somit ist ebenfalls eine schmale Rampe und somit ein geringes Geschwindigkeitsintervall zur Abregelung vorteilhaft.

Ferner wird auf die Druckschrift US 11 014 626 B2 verwiesen. Diese offenbart ein Verfahren zur Anpassung der motorischen Unterstützung eines elektrischen Fahrrads in Abhängigkeit von der Neigung der Straße bzw. des Untergrunds. Dazu werden die Geschwindigkeit und die Beschleunigung des Fahrzeugs sowie ein Neigungswinkel der Straße ermittelt. Eine Unterstützung variiert auf Basis eines nichtlinearen Zusammenhangs zwischen dem Unterstützungsfaktor und dem Neigungswinkel für verschiedene Unterstützungsmodi basierend auf vordefinierten Kennfeldern. Ferner wird auf die Druckschriften US 5 474 148 A und CN 113 415 375 A verwiesen.

### Offenbarung der Erfindung

Das erfindungsgemäße Verfahren zum Steuern einer von einem Motor eines elektrischen Fahrrades bereitgestellten motorischen Unterstützung umfasst die Merkmale des Anspruchs 1. Ferner wird eine Vorrichtung zum Steuern einer von einem Motor eines elektrischen Fahrrades bereitgestellten motorischen Unterstützung mit den Merkmalen des Anspruchs 10 und ein elektrisches Fahrrad nach Anspruch 11 beansprucht. Vorteilhafte Weiterbildungen sind den abhängigen Ansprüchen zu entnehmen.

Der Abregelfaktor bestimmt, wie stark eine zunächst ermittelte motorische Unterstützung beschränkt werden soll. Die für das Ansteuern des Motors ermittelte motorischen Unterstützung wird dabei insbesondere durch einen Unterstützungsfaktor, eine für ein Ansteuern des Motors ermittelten Motorleistung und/oder ein für ein Ansteuern des Motors ermittelten Motordrehmoment beschrieben. So wird insbesondere zunächst der Unterstützungsfaktor, die gewünschte Motorleistung und/oder das gewünschtes Motordrehmoment ermittelt, beispielsweise basierend auf einem bereitgestellten Fahrerdrehmoment, also einem Drehmoment, welches ein Fahrer des elektrischen Fahrrads auf die Pedale ausübt. Diese gewünschten Werte werden gemäß dem Abregelfaktor verringert.

Die variable Änderungsrate des Abregelfaktors beschreibt, wie sich der Abregelfaktor über seinen zeitlichen Verlauf hin ändert. Wird der Abregelfaktor beispielsweise über einen zeitlichen Verlauf hinweg dargestellt, so beschreibt die Änderungsrate eine Steigung dieser Kurve.

Die Änderungsrate wird derart gewählt, dass der Abregelfaktor dekrementiert wird, wenn eine aktuelle Geschwindigkeit größer als eine Zielgeschwindigkeit ist und der Abregelfaktor wird inkrementiert, wenn die aktuelle Geschwindigkeit kleiner als die Zielgeschwindigkeit ist. Ist die aktuelle Geschwindigkeit gleich der Zielgeschwindigkeit, ist die Änderungsrate null und der Abregelfaktor bleibt somit konstant. Ein höherer Abregelfaktor beschreibt dabei eine geringere Beschränkung der motorischen Unterstützung als ein vergleichsweise geringer Abregelfaktor. Ist der Abregelfaktor gleich null, ist die motorische Unterstützung komplett unterdrückt. Somit versucht die Motorunterstützung die aktuelle Geschwindigkeit auf Zielgeschwindigkeit einzuregeln, fährt das eBike schneller als die Zielgeschwindigkeit, wird die Motorunterstützung reduziert, fährt es langsamer, wird die Motorunterstützung möglichst erhöht.

Die Zielgeschwindigkeit ist die Geschwindigkeit, auf welche das elektrische Fahrrad bei einem Betrieb mit motorischer Unterstützung beschränkt werden soll. Das bedeutet mit anderen Worten, dass oberhalb der Zielgeschwindigkeit zumindest langfristig keine motorische Unterstützung durch den Motor bereitgestellt werden soll. Das Beschränken bedeutet jedoch nicht, dass die Zielgeschwindigkeit nicht kurzfristig überschritten werden kann. Da erfindungsgemäß die Änderungsrate des Abregelfaktors verändert wird, also inkrementiert oder dekrementiert wird, kann es dazu kommen, dass bei einer aktuellen Geschwindigkeit, welche größer als die Zielgeschwindigkeit ist, dennoch eine motorische Unterstützung bereitgestellt wird. Die Zielgeschwindigkeit kann in unterschiedlicher Weise gewählt werden. So ist die Zielgeschwindigkeit beispielsweise eine maximale Unterstützungsgeschwindigkeit oder eine Geschwindigkeit, welche geringer ist als die maximale Unterstützungsgeschwindigkeit ist, falls ein Überschreiten der maximalen Unterstützungsgeschwindigkeit nicht zulässig ist, auch wenn dieses nur kurzfristig erfolgt.

Ist zur Zielgeschwindigkeit (bspw. 25km/h) eine Maximalgeschwindigkeit vorgegeben (z.B. 27.5 km/h und damit höher als eine Zielgeschwindigkeit), so wird die Änderungsrate bevorzugt so gewählt, dass der Abregelfaktor ab Überschreiten der Maximalgeschwindigkeit null beträgt. Dazu kann insbesondere bei Geschwindigkeiten zwischen der Zielgeschwindigkeit und der Maximalgeschwindigkeit basierend auf der Beschleunigung und der aktuellen Geschwindigkeit die Zeit bis zum Erreichen der Maximalgeschwindigkeit prognostiziert werden und damit eine Änderungsrate vorgegeben werden, sodass die Motorunterstützung möglichst harmonisch ausklingt.

Es erfolgt ein Anpassen des aktuell vorliegenden Abregelfaktors basierend auf der ermittelten Änderungsrate des Abregelfaktors. Die Änderungsrate des Abregelfaktors wird dabei bevorzugt so ermittelt, dass die Motorunterstützung bei Überschreiten einer Zielgeschwindigkeit mit der Zeit geringer wird, bei Unterschreiten der Zielgeschwindigkeit mit der Zeit höher wird. Entsprechend wird der aktuell vorliegende Abregelfaktor verändert. So definiert die Änderungsrate eine Änderung des Abregelfaktors über das Zeitintervall. Diese Änderung wird dem aktuell vorliegenden Abregelfaktor angerechnet.

Der Abregelfaktor ist insbesondere ein Wert, mit dem der Unterstützungsfaktor, die ermittelte Motorleistung und/oder das ermittelte Motordrehmoment multipliziert wird, um diesen oder diese mit dem Abregelfaktor zu beaufschlagen.

Es wird somit ermöglicht, dass höhere Endgeschwindigkeit bei zumindest gleichbleibendem Abregelkomfort erreicht werden. Gleichzeitig erlaubt das Verfahren auch eine weitere Optimierung, wobei insbesondere auch unterschiedliche Verfahren zum Ermitteln einer motorischen Unterstützung mit dem erfindungsgemäßen Verfahren kombiniert werden können. So wird beispielsweise durch ein beliebiges Verfahren ermittelt, wie stark eine motorische Unterstützung ausfallen soll und diese wird basierend auf dem erfindungsgemäßen Verfahren abgeregelt.

Die Änderungsrate wird bevorzugt so eingestellt, dass eine Sollgeschwindigkeit oder Zielgeschwindigkeit möglichst eingeregelt wird. Zudem wird die Änderungsrate bevorzugt so eingestellt, dass die Motorleistung niemals zu abrupt zunimmt oder abnimmt und/oder die Beschleunigung sich niemals zu abrupt ändert. Optional wird die Änderungsrate so eingestellt, dass bei projiziertem Erreichen einer maximal-zulässigen Geschwindigkeit die Motorleistung 0 sein wird. Weiter optional können gesetzlich zulässige temporäre Überschwinger über eine maximal-zulässigen Geschwindigkeit abgebildet werden, indem eine Zeitspanne für ein Runterrampen der Motorleistung bei Überschreitung der maximal-zulässigen Geschwindigkeit definiert wird.

Die Unteransprüche zeigen bevorzugte Weiterbildungen der Erfindung.

Bevorzugt wird die Änderungsrate basierend auf der aktuellen Geschwindigkeit und einer aktuellen Beschleunigung ermittelt. Die aktuelle Geschwindigkeit und die aktuelle Beschleunigung werden dabei insbesondere mittels einer Sensorik des Fahrrades ermittelt. Es wird insbesondere ein schnelles Absinken des Abregelfaktor verursacht durch eine entsprechende Änderungsrate verursacht, wenn eine vorliegende Beschleunigung darauf hindeutet, dass es zu einem weiten Überschießen der Zielgeschwindigkeit kommen könnte. Es wird somit vermieden, dass eine maximale Unterstützungsgeschwindigkeit deutlich höher als die Zielgeschwindigkeit ist.

Dabei ist es vorteilhaft, wenn die Änderungsrate ferner basierend auf weiteren Messgrößen, insbesondere einer Steigung, einem maximalen Motordrehmoment, einem Fahrerdrehmoment und/oder einem durch eine Untergrunderkennung erkannten Untergrund des Fahrrades ermittelt wird. So kann das Abregeln beispielsweise an einer Steigung sanfter erfolgen als bei einer Abfahrt (z.B. um Schwung mitzunehmen). Alternativ oder zusätzlich kann die Abregelung auf dem Trail ruppiger erfolgen, um dem Fahrer maximal über welligen Untergrund zu unterstützen.

Ferner ist es vorteilhaft, wenn die Änderungsrate bei gleicher Beschleunigung mit einer steigenden aktuellen Geschwindigkeit zu einem schnelleren Dekrementieren des Abregelfaktors führt, und die Änderungsrate bei gleicher Geschwindigkeit mit einer steigenden aktuellen Beschleunigung zu einem schnelleren Dekrementieren des Abregelfaktors führt. Insbesondere ist es vorteilhaft die Änderungsrate bei Annäherung an die Zielgeschwindigkeit und/oder Maximalgeschwindigkeit zu einem schnelleren Dekrementieren des Abregelfaktors führt. Es wird somit erreicht, dass insbesondere bei besonders hohen Geschwindigkeiten und besonders hohen aktuellen Beschleunigungen eine besonders hohe Änderungsrate gewählt wird, wodurch ein besonders reaktionsschnelles Abregeln erfolgt.

Auch ist es vorteilhaft, wenn die Änderungsrate proportional zu einer Differenz zwischen aktueller Geschwindigkeit und Zielgeschwindigkeit ist. Es wird somit ein einfaches Verfahren zum Einregeln der Zielgeschwindigkeit geschaffen.

Zudem ist es vorteilhaft, wenn die Änderungsrate proportional einer aktuellen Beschleunigung und proportional zur reziproken Differenz zwischen aktueller Geschwindigkeit und Maximalgeschwindigkeit ist. Es wird somit ein einfaches Verfahren zum kompletten Abregeln bei der Maximalgeschwindigkeit geschaffen.

Auch ist es vorteilhaft, wenn die Änderungsrate kleiner oder gleich einer aktuellen Beschleunigung, geteilt durch eine Differenz zwischen aktueller Geschwindigkeit und Maximalgeschwindigkeit ist. Auf diese Weise kann ein von einer aktuellen Beschleunigung und einer aktuellen Geschwindigkeit abhängige Änderungsrate in einfacher Weise mathematisch schnell ermittelt werden. Dabei wird die Änderungsrate so gewählt, dass der Abregelfaktor stets zu dem aus aktueller Geschwindigkeit und Beschleunigung projizierten Zeitpunkt des Überschreitens einer über der Zielgeschwindigkeit liegenden maximalen Unterstützungsgeschwindigkeit hinreichend klein ist.

Auch ist es vorteilhaft, wenn mögliche Werte der Änderungsrate auf ein vordefiniertes Intervall, bspw. [-10/s..10/s], beschränkt sind. Ein zu ruckhaftes Ein-/Aussetzen der Motorunterstützung wird damit vermieden. Somit kann beispielsweise vermieden werden, dass der Motor bei einer schnellen Reduzierung der Geschwindigkeit zu schnell wieder einsetzt. So können beispielsweise während eines Sprungs die Räder und somit der Motor des Fahrrads frei drehen, was zu einer hohen erfassten Geschwindigkeit führt. Dies könnte zu einem sehr hohen Änderungsrate und daraus resultierenden sehr niedrigem Abregelfaktor und der damit verbundenen starken schlagartigen Abregelung führen, wenn die Änderungsrate nicht beschränkt ist. Bei einer Landung wäre die Motorunterstützung zuerst abgeregelt, es würde es dann aber zu einem schlagartigen Abbremsen des Rades kommen und basierend auf der daraus ermittelten Geschwindigkeit die nun positive Änderungsrate die Motorunterstützung entsprechend abrupt wieder einsetzen lassen. Ist die Änderungsrate jedoch auf ein vordefiniertes Intervall beschränkt, so wird dies vermieden. Es wird damit ein sanftes Einsetzen des Motors erreicht.

Auch ist es vorteilhaft, wenn der Abregelfaktor auf das jeweils kleinere aus einem maximal zulässigen Motordrehmoment und einem von einem Fahrer angeforderten Drehmoment angewendet wird, insbesondere mit diesem multipliziert wird, um ein angefordertes Drehmoment zu ermitteln, welches von dem Motor bereitgestellt werden soll. Es wird somit das angeforderte Motormoment zuerst begrenzt und dann der Abregelfaktor angewendet. Somit stellt der Abregelfaktor nicht nur eine Limitierung dar, sondern wird auf das angeforderte Drehmoment angewendet. Es wird somit sichergestellt, dass die Übergänge bei dem Bereitstellen der motorischen Unterstützung sanft sind.

Des Weiteren ist es vorgesehen, dass der Abregelfaktor auf einen Minimalwert von 0 und auf einen Maximalwert von 1 beschränkt ist. Dadurch, dass der Abregelfaktor so definiert wird, kann dieser durch einfache Multiplikation auf ermittelte Unterstützungsparameter angewendet werden. So kann beispielsweise der Unterstützungsfaktor, die ermittelte Motorleistung oder das ermittelte Motordrehmoment einfach mit dem Abregelfaktor multipliziert werden, um diese mit dem Abregelfaktor zu beaufschlagen.

Auch ist es vorteilhaft, wenn die Änderungsrate sich in einem vordefinierten Geschwindigkeitsintervall um die Zielgeschwindigkeit mit einer Änderung der aktuellen Geschwindigkeit weniger stark ändert als bei einer Geschwindigkeit oberhalb und/oder unterhalb des Geschwindigkeitsintervalls. Es wird somit erreicht, dass eine bereitgestellte motorische Unterstützung sich um die Zielgeschwindigkeit sanft einschwingt.

Auch ist es vorteilhaft, wenn eine maximale Zeitdauer definiert ist, über die eine maximale Geschwindigkeit überschritten werden darf und die Änderungsrate derart gewählt wird, dass der Abregelfaktor so dekrementiert wird, dass die aktuelle Geschwindigkeit innerhalb der maximalen Zeitdauer unter die maximale Geschwindigkeit abfällt oder die Motorunterunterstützung auf Null abfällt. So wird die Änderungsrate insbesondere mit einer Annäherung an ein Ende der maximalen Zeitdauer so verändert, dass der Abregelfaktor schneller dekrementiert wird. Dadurch kann sichergestellt werden, dass insbesondere gesetzliche Vorgaben sicher eingehalten werden. Die Motorunterstützung fällt insbesondere auf Null abfällt, falls der Fahrer selber stark genug tritt und für ein Überschreiten der Maximalgeschwindigkeit sorgt.

Eine Vorrichtung zum Steuern einer von einem Motor eines elektrischen Fahrrades bereitgestellten motorischen Unterstützung umfasst eine Steuereinheit, welche dazu eingerichtet ist, das erfindungsgemäße Verfahren auszuführen. Die Vorrichtung weist alle Vorteile des Verfahrens auf.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Ablaufdiagramm eines Verfahrens zum Steuern einer von einem Motor eines elektrischen Fahrrades bereitgestellten Unterstützung,
- Figur 2: eine schematische Darstellung eines elektrischen Fahrrads mit einer Vorrichtung, durch welche das erfindungsgemäße Verfahren ausgeführt wird,
- Figur 3: ein Diagramm, welches einen Zusammenhang zwischen der variablen Änderungsrate, einer aktuellen Geschwindigkeit und einer aktuellen Beschleunigung darstellt,
- Figur 4: einen vorteilhaften Zusammenhang zwischen der variablen Änderungsrate und einer aktuellen Geschwindigkeit, und
- Figur 5: eine schematische Darstellung, welche das Beaufschlagen des für ein Ansteuern des Motors ermittelten Motordrehmoments beispielhaft darstellt.

### Ausführungsformen der Erfindung

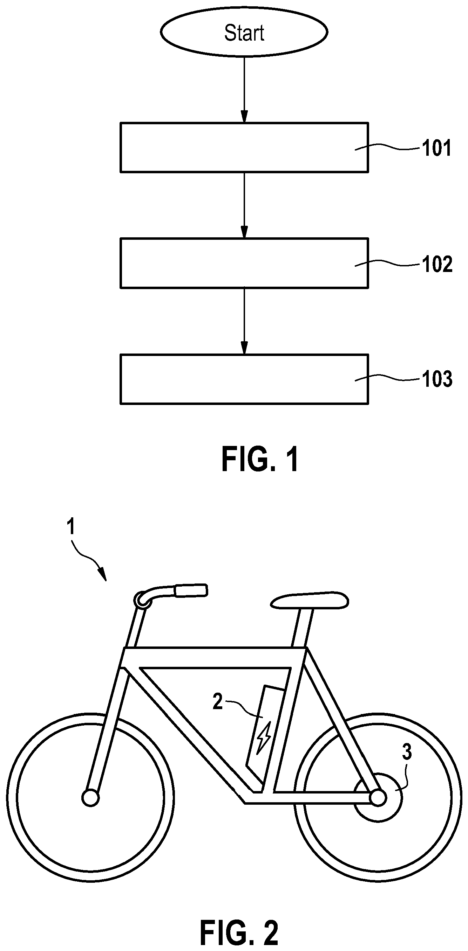

Figur 1 zeigt ein Ablaufdiagramm für ein erfindungsgemäßes Verfahren 100 zum Steuern einer von einem Motor eines elektrischen Fahrrades 1 bereitgestellten motorischen Unterstützung. In Figur 2 ist ein zugehöriges Fahrrad 1 dargestellt, welches einen Motor 3 und eine Steuereinheit 2 umfasst. Durch die Steuereinheit 2 des elektrischen Fahrrades 1 wird das Verfahren 100 ausgeführt und der Motor 3 entsprechend angesteuert.

Das Verfahren umfasst einen ersten Schritt 101, einen zweiten Schritt 102 und einen dritten Schritt 103. Nach einem Anstoßen des Verfahrens 100 wird zunächst der erste Schritt 101 ausgeführt.

In dem ersten Schritt 101 erfolgt ein Ermitteln einer variablen Änderungsrate eines Abregelfaktors, welche definiert, in welchem Ausmaß sich ein Abregelfaktor über ein zeitliches Zeitintervall hinweg verändert. Der Abregelfaktor ist dabei ein Faktor in einem Wertebereich von 0 bis 1 und hat somit einen Minimalwert von 0 und einen Maximalwert von 1.

Der Abregelfaktor ist ein Faktor, welcher beschreibt, in welchem Grad eine motorische Unterstützung eingeschränkt wird. So wird der Abregelfaktor beispielsweise mit einem ermittelten Unterstützungsfaktor, einer für ein Ansteuern des Motors ermittelten Motorleistung und/oder einem für ein Ansteuern des Motors ermittelten Drehmoments multipliziert, um diese Werte zu beschränken und somit die bereitgestellte motorische Unterstützung des Fahrrades zu limitieren. Der Unterstützungsfaktor ist ein Faktor, welcher beschreibt, welches Motordrehmoment abhängig von einem Fahrer des Fahrrades 1 bereitgestellten Fahrerdrehmoment abgegeben werden soll. Wird der Unterstützungsfaktor mit dem Abregelfaktor multipliziert, so verringert sich der resultierende Unterstützungsfaktor und auch die motorische Unterstützung wird verringert. In entsprechender Weise kann eine für ein Ansteuern des Motors ermittelte Motorleistung mit dem Abregelfaktor multipliziert werden oder ein für das Ansteuern des Motors ermitteltes Drehmoment mit dem Abregelfaktor multipliziert werden, um diese zu verringern. Es wird darauf hingewiesen, dass der Abregelfaktor den Wert 1 einnehmen kann. In diesem Fall erfolgt keine Limitierung der motorischen Unterstützung. Auch kann der Abregelfaktor den Wert 0 annehmen, womit eine motorische Unterstützung gänzlich unterbunden wird.

Es wird eine variable Änderungsrate des Abregelfaktors ermittelt. Die Änderungsrate ist variabel, da diese kontinuierlich neu ermittelt wird. Das hier beschriebene Verfahren wird daher bevorzugt in einer Schleife ausgeführt. Die variable Änderungsrate definiert, in welchem Ausmaß sich der Abregelfaktor über ein definiertes Zeitintervall hinweg verändert. Ist die Änderungsrate hoch, so ändert sich der Abregelfaktor über den zeitlichen Verlauf hinweg schneller, als wenn der die Änderungsrate vergleichsweise niedriger ist.

Die Änderungsrate wird derart gewählt, dass der Abregelfaktor dekrementiert wird, wenn eine aktuelle Geschwindigkeit größer als die Zielgeschwindigkeit ist und der Abregelfaktor inkrementiert wird, wenn die aktuelle Geschwindigkeit kleiner als die Zielgeschwindigkeit ist. Die Änderungsrate ist somit abhängig von der aktuellen Geschwindigkeit und der Zielgeschwindigkeit. Die aktuelle Geschwindigkeit ist dabei eine Geschwindigkeit, welche von einer Geschwindigkeitssensorik des Fahrrads 1 erfasst wird. Die Zielgeschwindigkeit ist eine Geschwindigkeit, mit welcher das Fahrrad 1 sich nach einem abgeschlossenen Abregelvorgang fortbewegen sollte. Die Zielgeschwindigkeit ist ein applizierbarer Wert. Ist die Änderungsrate ein positiver Wert, so wird der Abregelfaktor über seinen zeitlichen Verlauf vergrößert, also inkrementiert. Ist die Änderungsrate ein negativer Wert, so wird der Abregelfaktor über seinen zeitlichen Verlauf verkleinert, also dekrementiert.

Je länger sich die aktuelle Geschwindigkeit oberhalb der Zielgeschwindigkeit befindet, desto weiter wird der Abregelfaktor dekrementiert. Mit sinkendem Abregelfaktor wird zugleich die motorische Unterstützung verringert, wodurch entweder die aktuelle Geschwindigkeit verringert wird oder mehr Kraft vom Fahrer des Fahrrades 1 aufgebracht werden muss, welche im letzten Schritt auch gänzlich ohne motorische Unterstützung bereitgestellt werden müsste. Liegt die aktuelle Geschwindigkeit unterhalb der Zielgeschwindigkeit, so wird die Änderungsrate derart gewählt, dass der Abregelfaktor inkrementiert wird, was letztlich dazu führt, dass der Abregelfaktor auf den Wert 1 zuläuft und somit die bereitgestellte motorische Unterstützung durch den Abregelfaktor nicht verringert wird. Es wird somit unterhalb der Zielgeschwindigkeit nach kurzer Zeit die volle motorische Unterstützung bereitgestellt. Gleichzeitig wird oberhalb der Zielgeschwindigkeit die motorische Unterstützung gemäß der Änderungsrate und dem Abregelfaktors verringert. Es wird jedoch darauf hingewiesen, dass erfindungsgemäß lediglich die Änderungsrate ermittelt wird und basierend auf dieser der Abregelfaktor ermittelt wird. Dies kann auch dazu führen, dass es zu einem Überschießen einer motorischen Unterstützung kommt. Es ist somit beispielsweise nicht zwingend sicher gegeben, dass die Zielgeschwindigkeit überschritten wird und zugleich keine motorische Unterstützung bereitgestellt wird. Es wird jedoch sichergestellt, dass die Änderungsrate zu einem solchen Zeitpunkt so gewählt wird, dass der Abregelfaktor sich kontinuierlich in eine Richtung verändert, dass die motorische Unterstützung zurückgenommen wird.

In einer beispielhaften Ausführungsform erfolgt das Ermitteln der variablen Änderungsrate geschwindigkeitsabhängig. So könnte die Änderungsrate beispielsweise basierend auf folgender Formel ermittelt werden, wobei dfₐ die Änderungsrate ist: ${df}_{a} = \left(1-\frac{v - 20 kmh}{5 kmh}\right) / 1 s$

Dabei ist v die aktuelle Geschwindigkeit, wobei die Zielgeschwindigkeit beispielhaft auf 25 km/h gewählt ist und ein Abregelvorgang in einem Geschwindigkeitsintervall zwischen 20 km/h und 25 km/h ausgeführt werden soll. Der Wert von 20 km/h steht dabei als beispielhafter Wert, der eine Geschwindigkeit beschreibt, ab der ein Abregelvorgang beginnen soll. Der Wert von 5 km/h steht beispielhaft für ein Geschwindkeitsintervall, interhalb dessen der Abregelvorgang erfolgen soll. So soll das Abregeln hier beispielsweise bei einer Geschwindigkeit von 20 km/h beginnen und bei einer Geschwindigkeit von 25 km/h abgeschlossen sein. Die Geschwindigkeit von 25 km/h ist somit die Zielgeschwindigkeit, bei welcher die Änderungsrate gleich 0 ist.

Alternativ zu dem Ermitteln der Änderungsrate basierend auf der aktuellen Geschwindigkeit und der Zielgeschwindigkeit, wird die Änderungsrate optional zusätzlich basierend auf der aktuellen Beschleunigung ermittelt. So wird die Änderungsrate beispielsweise basierend auf folgender Formel ermittelt: ${df}_{a} \leq \frac{a}{v - {v}_{max}}$

Dabei beschreibt a die aktuelle Beschleunigung, v die aktuelle Geschwindigkeit und vₘₐₓ die Zielgeschwindigkeit. Die Änderungsrate ist gemäß der zuvor beschriebenen Formel kleiner oder gleich einer aktuellen Beschleunigung, geteilt durch eine Differenz zwischen aktueller Geschwindigkeit und Zielgeschwindigkeit.

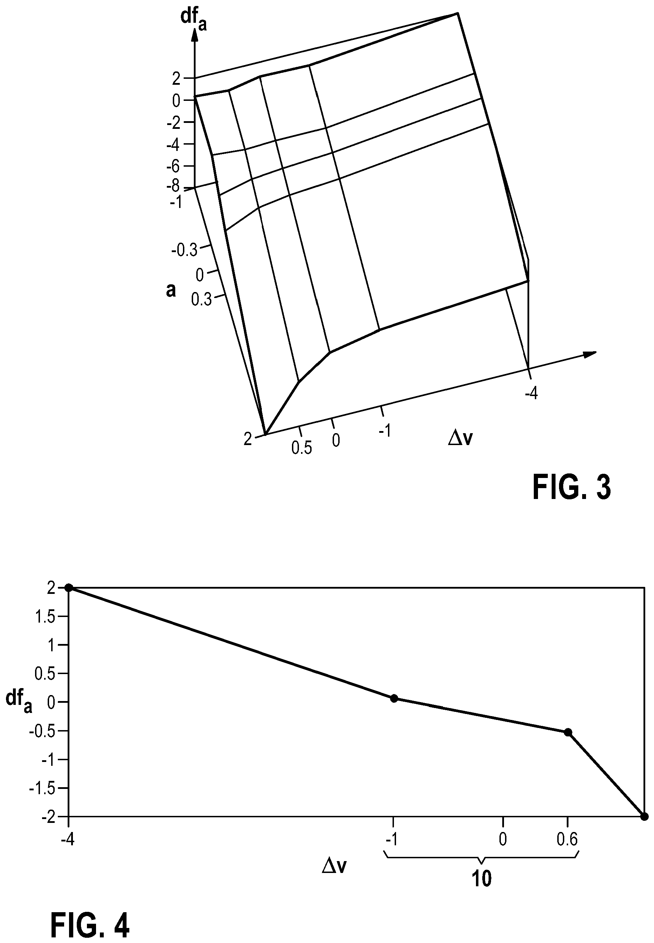

In jedem Fall wird dabei angestrebt, dass die Änderungsrate bei gleicher Beschleunigung mit einer steigenden aktuellen Geschwindigkeit zu einem schnelleren Dekrementieren des Abregelfaktors führt und die Änderungsrate bei gleicher Geschwindigkeit mit einer steigenden aktuellen Beschleunigung zu einem schnelleren Dekrementieren des Abregelfaktors führt. Es ist somit ein Zusammenhang zwischen der Änderungsrate und zwei unterschiedlichen Parametern, hier der aktuellen Geschwindigkeit und der aktuellen Beschleunigung gegeben. Dies ist beispielhaft in Figur 3 dargestellt, welche ein beispielhaftes Kennfeld für die Änderungsrate zeigt. Dabei ist entlang einer ersten Achse die Änderungsrate dfₐ in einem Wertebereich von -8 bis +2 dargestellt. Die Werte geben an, inwiefern sich der Abregelfaktor in 1s ändern soll. Ist die Änderungsrate positiv, so wird der Abregelfaktor inkrementiert. Ist die Änderungsrate negativ, so wird der Abregelfaktor dekrementiert. Über eine zweite Achse ist die Beschleunigung a dargestellt. Dabei ist ein Wertebereich von -1 bis 2 dargestellt. Positive Werte entsprechen dabei einer positiven Beschleunigung und negative Werte einer negativen Beschleunigung, also einer Verzögerung. Über eine dritte Achse ist eine Abweichung Δv der aktuellen Geschwindigkeit von der Zielgeschwindigkeit dargestellt. Der auf der dritten Achse beschriebene Wert errechnet sich somit aus aktueller Geschwindigkeit minus Zielgeschwindigkeit. Ist die Geschwindigkeitsdifferenz und somit die Abweichung Δv kleiner als 0, so liegt die aktuelle Geschwindigkeit unterhalb der Zielgeschwindigkeit. Ist die Geschwindigkeitsdifferenz und somit die Abweichung Δv größer als 0, so liegt die aktuelle Geschwindigkeit oberhalb der Zielgeschwindigkeit.

Es ist ersichtlich, dass eine Fläche aufgespannt wird, welche ein Ablesen der Änderungsrate abhängig von aktueller Geschwindigkeit und Beschleunigung ermöglicht. So ist beispielsweise erkennbar, dass bei besonders hohen Geschwindigkeiten und Beschleunigungen oberhalb der Zielgeschwindigkeit ein besonders hoher Betrag für die Änderungsrate gewählt wird. Die Änderungsrate ist dabei also mit vergleichsweise hohem Betrag negativ gewählt, was dazu führt, dass der Abregelfaktor schnell (wegen dem hohen Betrag) dekrementiert (wegen dem negativen Vorzeigen) wird und auf den Wert 0 zuläuft. Es wird also eine motorische Unterstützung besonders schnell zurückgenommen. Ist die aktuelle Geschwindigkeit gleich der Zielgeschwindigkeit, also die Abweichung Δv gleich 0, und die aktuelle Beschleunigung a gleich 0, so wird die Änderungsrate zu einem Wert von 0 gewählt und der aktuell vorliegende Abregelfaktor wird unverändert beibehalten.

Es wird also die Zielgeschwindigkeit für die Abregelung definiert, z.B. 25km/h. Bevorzugt wird zudem ein Geschwindigkeitsbereich über der Zielgeschwindigkeit definiert, indem nur temporär unterstützt werden darf: die Motorunterstützung muss innerhalb einer definierten Zeit beendet werden. Unterhalb der 25km/h soll zunehmend wieder unterstützt werden. Zudem wird die Beschleunigung berücksichtigt, um ein Überschreiten der Zielgeschwindigkeit zu antizipieren, bzw. auszuschließen.

In Figur 3 ist beispielhaft dargestellt, wie die Änderungsrate abhängig von der aktuellen Geschwindigkeit gewählt werden kann. Figur 4 beschreibt dabei entweder als ein Querschnitt durch die in Figur 3 gezeigte Fläche, wobei die Beschleunigung zu 0 gewählt ist, oder beschreibt alternativ ein Ermitteln der Änderungsrate unabhängig von der aktuellen Beschleunigung. In Figur 4 ist entlang einer y-Achse die Änderungsrate dfₐ in einem Wertebereich von -2 bis +2 dargestellt. Die Werte geben an, inwiefern sich der Abregelfaktor in 1s ändern soll. Über eine x-Achse ist die Abweichung Δv der aktuellen Geschwindigkeit von der Zielgeschwindigkeit dargestellt.

Aus Figur 4 ist dabei ersichtlich, dass die Änderungsrate sich geschwindigkeitsabhängig unterhalb eines um die Zielgeschwindigkeit definierten Geschwindigkeitsintervalls 10 schneller ändert als innerhalb des Geschwindigkeitsintervalls 10. In entsprechender Weise ändert sich die Änderungsrate geschwindigkeitsabhängig schneller oberhalb des definierten Geschwindigkeitsintervalls 10 als innerhalb des Geschwindigkeitsintervalls 10. Das bedeutet, dass das System sensibler auf Geschwindigkeitsänderungen reagiert, wenn die aktuelle Geschwindigkeit weiter von der Zielgeschwindigkeit abweicht. Auf diese Weise kann erreicht werden, dass nahe der Zielgeschwindigkeit ein sanftes Einregeln auf die Zielgeschwindigkeit erfolgt, indem die Änderungsrate nur wenig geändert wird. Weiter abweichend von der Zielgeschwindigkeit kann jedoch eine schnelle Reaktionen des Systems erreicht werden, beispielsweise, um ein langfristiges Überschreiten einer Maximalgeschwindigkeit oder ein langfristiges Unterschreiten einer Minimalgeschwindigkeit zu vermeiden. Die Grenzen des Geschwindigkeitsintervalls 10 sind bei bevorzugt durch die Minimalgeschwindigkeit und die Maximalgeschwindigkeit definiert.

Optional ist die Änderungsrate auf ein vordefiniertes Intervall beschränkt. Das bedeutet, dass ein Minimalwert und ein Maximalwert für die Änderungsrate definiert ist und diese nicht außerhalb dieses Intervalls liegen kann. So könnte gemäß Figur 3 die Änderungsrate beispielsweise auf ein Intervall von -8 bis 2 beschränkt sein. Eine rechnerische Beschränkung der Änderungsrate dfₐ könnte wie folgt gestaltet sein: $- \frac{0.5}{s} \leq {df}_{a} \leq \frac{0.5}{s}$

Durch eine solche Beschränkung der Änderungsrate kann vermieden werden, dass der Motor 3 bei schneller Reduzierung der Geschwindigkeit zu schnell wieder einsetzt. So kommt es beispielsweise vor, dass ein Rad des Fahrrades 1 während einem Sprung frei dreht und somit eine hohe aktuelle Geschwindigkeit erfasst wird. Diese ist jedoch theoretisch zu hoch, da diese lediglich durch das freie Drehen des Rades erreicht wird. Um zu vermeiden, dass die bereitgestellte motorische Unterstützung sofort voll abgeregelt wird, ist es vorteilhaft, die Änderungsrate zu beschränken. So wird eine motorische Unterstützung zwar innerhalb der während des Sprungs verstreichenden Zeit zwar geringfügig reduziert, jedoch nicht so weit reduziert, dass dieses zu einem schlagartigen Abbremsen des Fahrrades 1 führt. Es kann somit ein sanftes Einsetzen des Motors 3 einer Landung nach einem Sprung erreicht werden.

In dem zweiten Verfahrensschritt 102 erfolgt ein Anpassen eines aktuell vorliegenden Abregelfaktors basierend auf der ermittelten Änderungsrate des Abregelfaktors. Dazu wird beispielsweise ein Zeitintervall seit dem letzten Setzen des Abregelfaktors ermittelt und basierend auf der ermittelten Änderungsrate ermittelt, wie stark sich der Abregelfaktor innerhalb dieses Zeitintervalls verändert hat. Dazu wird die Änderungsrate beispielsweise mit dem Zeitintervall multipliziert und der ermittelte Wert auf den aktuellen Abregelfaktor addiert. Entsprechend wird der Abregelfaktor neu gesetzt. In einer mathematischen Beschreibung könnte dies wie folgt aussehen: ${f}_{a} \left(t+dt\right) = max \left[min\left[{f}_{a}\left(t\right)+{df}_{a}∗dt;1\right];0\right]$

Dabei beschreibt die Funktion fₐ(t) den zeitlichen Verlauf des Abregelfaktors, dfₐ die Änderungsrate und dt das Zeitintervall, seit dem letzten Setzen des Abregelfaktors. Der Abregelfaktor wird dabei derart gewählt, dass dieser nicht kleiner als 0 und nicht größer als 1 ist.

In dem dritten Schritt 103 erfolgt ein Beaufschlagen des für ein Ansteuern des Motors 3 ermittelten Unterstützungsfaktors, der für ein Ansteuern des Motors 3 ermittelten Motorleistung und/oder der für ein Ansteuern des Motors 3 ermittelten Motordrehmoments mit dem errechneten Abregelfaktor aus dem zweiten Schritt 102. Dazu werden die zuvor beschriebene Werte mit dem Abregelfaktor multipliziert. Die so errechneten Werte werden als Zielwerte für eine Steuerung der motorischen Unterstützung bereitgestellt und von dem Motor 3 für den Fahrer bereitgestellt.

Insbesondere dann, wenn gesetzliche Vorgaben zu erfüllen sind, ist es vorteilhaft, wenn eine maximale Zeitdauer definiert ist, über die eine maximale Geschwindigkeit hinweg überschritten werden darf. In diesem Falle wird die Änderungsrate derart gewählt, dass der Abregelfaktor so inkrementiert wird, dass die aktuelle Geschwindigkeit innerhalb der maximalen Zeit unter die maximale Geschwindigkeit abfällt. So kann beispielsweise kontinuierlich ein verbleibendes Zeitintervall ermittelt werden, innerhalb dessen die Geschwindigkeit auf die maximale Geschwindigkeit abfallen muss. Mit sinkender Dauer des Zeitintervalls wird der Abregelfaktor beispielsweise schneller dekrementiert, also die Änderungsrate vergrößert.

Ist der Zusammenhang zwischen Motorunterstützung und Beschleunigung bekannt oder kann dieser abgeschätzt werden, so kann dies vorteilhaft genutzt werden. Zum Beispiel kann es das Ziel der Abregelung sein, dass in einem Betriebszustand die Beschleunigung so angepasst wird, dass sie möglichst harmonisch ab einer Grenzgeschwindigkeit 0 erreicht. Beispielsweise wird das Fahrrad 1 ausgehend von 15km/h konstant beschleunigt. Ab einer Geschwindigkeit von 20km/h kann die Abregelung entscheiden, einzugreifen und die Systemleistung anzupassen, so dass die ermittelte Beschleunigung gleichmäßig reduziert wird, sodass diese bei einer Maximalgeschwindigkeit von 25km/h möglichst 0 wird. In diesem Fall wird die dazu notwendige Abregeländerung aus der Kenntnis des Zusammenhangs berechnet. Dabei ergibt sich aus einer gewünschte Beschleunigungsänderung (abhängig vom Betriebspunkt) eine notwendige Änderung der Motorunterstützung und damit eine zugehörige Änderung des Abregelfaktors.

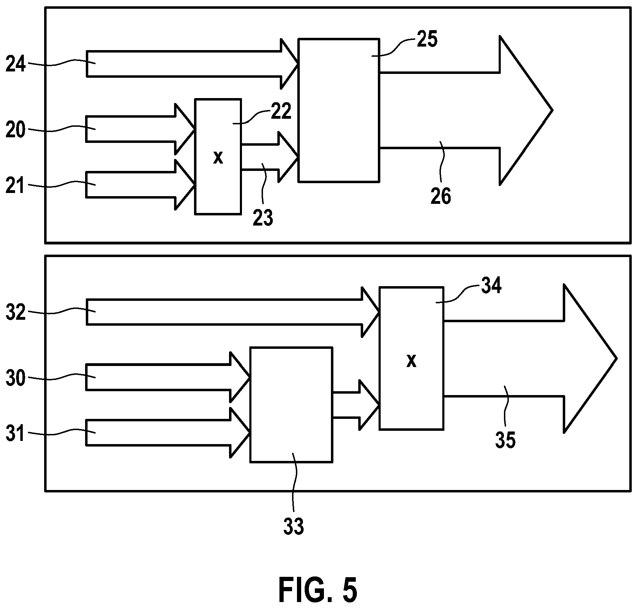

Figur 5 zeigt ein Ablaufdiagramm eines erfindungsgemäßen Verfahrens 100, um die Unterschiede gegenüber dem Stand der Technik zu verdeutlichen. Ein herkömmliches Verfahren ist beispielsweise in Figur 5 oben dargestellt. So war es bislang üblich, dass ein Abregelfaktor 20 gewählt wurde und in einem Multiplikationsschritt 22 mit einem maximal zulässigen Motormoment 21 multipliziert wurde. Das daraus resultierende Motormoment 23 wurde mit einem von einem Fahrer angeforderten Motormoment 24 in einem Vergleichsschritt 25 verglichen und der jeweils kleinere dieser beiden Werte 26 wurde für ein Ansteuern des Motors 3 bereitgestellt, um ein angefordertes Motormoment durch die Geschwindigkeitsabregelung zu beschreiben.

In Figur 5 unten ist das Prinzip der vorliegenden Erfindung nochmals veranschaulicht. So wird zunächst das maximal zulässige Motordrehmoment 31 mit dem von dem Fahrer angeforderten Motordrehmoment 30 verglichen und das kleinere dieser beiden Drehmomente in einem Vergleichsschritt 33 gewählt. Dieses wird in einem Multiplikationsschritt 34 mit dem Abregelfaktor 32 multipliziert und das resultierende Motordrehmoment 35 wird als angefordertes Motordrehmoment von der Geschwindigkeitsabregelung bereitgestellt.

Es wird somit ein Verfahren für ein geschwindigkeitsbezogenes Abregeln eines elektrischen Fahrrades geschaffen. Jede Abregelung hat dabei gemein, dass ein Abregelfaktor bestimmt wird, der bspw. auf den Unterstützungsfaktor und/oder das aktuelle/maximale Motormoment /-leistung angewendet wird. Dieser Abregelfaktor ergibt sich bisher direkt aus einer geschwindigkeitsabhängigen Rampe.

Erfindungsgemäß ist der Abregelfaktor nicht mehr direkt abhängig von der Geschwindigkeit (oder Beschleunigung, etc.), sondern es wird vielmehr die Änderungsrate des Abregelfaktors definiert. In der einfachsten Realisierung (nur geschwindigkeitsabhängig) ist die Änderungsrate negativ, wenn eine aktuelle Geschwindigkeit über der Abregelgeschwindigkeit ist, und positiv, wenn die aktuelle Geschwindigkeit unter der Abregelgeschwindigkeit liegt. Dies kann im einfachsten durch einen linearen Zusammenhang definiert sein.

In einer bevorzugten Ausführungsform ist die Änderungsrate von der aktuellen Geschwindigkeit und der aktuellen Beschleunigung des Fahrrades 1 abhängig. Zusammen ergeben sie den Phasenraum (vollständige Beschreibung der aktuellen relevanten Dynamik). Zusätzlich kann noch die aktuelle Leistung des Gesamtsystems betrachtet werden. Die Änderungsrate wird fortlaufend abhängig von der aktuellen Geschwindigkeit und Beschleunigung (oder weiteren Größen) angepasst.

Es fällt auf, dass temporär Unterstützungen auch über der Zielgeschwindigkeit möglich sind, das System aber bei dauerhafter Überschreitung die Unterstützung zuverlässig beendet. Durch eine geschickte Wahl der Änderungsrate kann dies vorteilhaft genutzt werden.

Bevorzugt wird die Änderungsrate so gewählt, dass der Abregelfaktor stets zu dem aus aktueller Geschwindigkeit und Beschleunigung projizierten Zeitpunkt des Überschreitens einer Maximalgeschwindigkeit hinreichend klein ist.

Neben der obigen schriftlichen Offenbarung wird explizit auf die Offenbarung der Figuren 1 bis 5 verwiesen.

## Patentansprüche

1. Verfahren (100) zum Steuern einer von einem Motor (3) eines elektrischen Fahrrades (1) bereitgestellten motorischen Unterstützung, umfassend:
• Ermitteln (101) einer variablen Änderungsrate eines Abregelfaktors, welche definiert, in welchem Ausmaß sich ein Abregelfaktor über ein definiertes Zeitintervall hinweg verändert, wobei der Abregelfaktor ein Faktor ist, welcher bestimmt, in welchem Grad eine motorische Unterstützung eingeschränkt wird, und wobei die Änderungsrate derart gewählt wird, dass der Abregelfaktor dekrementiert wird, wenn eine aktuelle Geschwindigkeit größer als eine Zielgeschwindigkeit ist, und der Abregelfaktor inkrementiert wird, wenn die aktuelle Geschwindigkeit kleiner als die Zielgeschwindigkeit ist,
• Anpassen (102) eines aktuell vorliegenden Abregelfaktors basierend auf der ermittelten Änderungsrate des Abregelfaktors, und
• Beaufschlagen (103) einer für ein Ansteuern des Motors (3) ermittelten motorischen Unterstützung mit dem angepassten Abregelfaktor, wobei ein größerer Abregelfaktor zu einer größeren motorischen Unterstützung führt als ein vergleichsweise kleinerer Abregelfaktor, wobei
• der Abregelfaktor auf einen Minimalwert von "0" und einen Maximalwert von "1" beschränkt ist.

2. Verfahren gemäß Anspruch 1, **dadurch gekennzeichnet, dass** die Änderungsrate basierend auf der aktuellen Geschwindigkeit und einer aktuellen Beschleunigung ermittelt wird.

3. Verfahren gemäß Anspruch 2, **dadurch gekennzeichnet, dass** die Änderungsrate ferner basierend auf weiteren Messgrößen, insbesondere einer Steigung, einem maximalen Motordrehmoment, einem Fahrerdrehmoment und/oder einem durch eine Untergrunderkennung erkannten Untergrund des Fahrrades (1) ermittelt wird.

4. Verfahren gemäß einem der Ansprüche 2 oder 3, **dadurch gekennzeichnet, dass**
• die Änderungsrate bei gleicher Beschleunigung mit einer steigenden aktuellen Geschwindigkeit zu einem schnelleren Dekrementieren des Abregelfaktors führt, und
• die Änderungsrate bei gleicher Geschwindigkeit mit einer steigenden aktuellen Beschleunigung zu einem schnelleren Dekrementieren des Abregelfaktors führt.

5. Verfahren gemäß Anspruch 2 bis 4, **dadurch gekennzeichnet, dass**
• die Änderungsrate proportional zu einer Differenz zwischen aktueller Geschwindigkeit und einer maximalen Unterstützungsgeschwindigkeit ist, oder
• die Änderungsrate proportional einer aktuellen Beschleunigung und proportional zur reziproken Differenz zwischen aktueller Geschwindigkeit und einer maximalen Unterstützungsgeschwindigkeit ist.

6. Verfahren gemäß einem der vorigen Ansprüche, **dadurch gekennzeichnet, dass** die möglichen Werte der Änderungsrate auf ein vordefiniertes Intervall beschränkt sind.

7. Verfahren gemäß einem der vorigen Ansprüche, **dadurch gekennzeichnet, dass** der Abregelfaktor auf das jeweils kleinere aus einem maximal zulässigen Motordrehmoment und einem von einem Fahrer angeforderten Drehmoment angewendet wird, insbesondere mit diesem multipliziert wird, um ein angefordertes Drehmoment zu ermitteln, welches von dem Motor bereitgestellt werden soll.

8. Verfahren gemäß einem der vorigen Ansprüche, **dadurch gekennzeichnet, dass** die Änderungsrate sich in einem vordefinierten Geschwindigkeitsintervall um die Zielgeschwindigkeit mit einer Änderung der aktuellen Geschwindigkeit weniger stark ändert, als bei einer Geschwindigkeit oberhalb und/oder unterhalb des Geschwindigkeitsintervalls.

9. Verfahren gemäß einem der vorigen Ansprüche, **dadurch gekennzeichnet, dass**
• eine maximale Zeitdauer definiert ist, über die eine maximale Geschwindigkeit überschritten werden darf, und
• die Änderungsrate derart gewählt wird, dass der Abregelfaktor so dekrementiert wird, dass die aktuelle Geschwindigkeit innerhalb der maximalen Zeitdauer unter die maximale Geschwindigkeit abfällt oder die Motorunterunterstützung auf null abfällt.

10. Vorrichtung zum Steuern einer von einem Motor (3) eines elektrischen Fahrrades (1) bereitgestellten motorischen Unterstützung, umfassend eine Steuereinheit (2), welche dazu eingerichtet ist, das Verfahren gemäß einem der vorigen Ansprüche auszuführen.

11. Elektrisches Fahrrad (1), aufweisend einen Motor (3) und eine Vorrichtung nach Anspruch 10.

## Claims

1. Method (100) for controlling a motor assistance provided by a motor (3) of an electric bicycle (1), comprising:
• ascertaining (101) a variable rate of change of a reduction factor, said rate of change defining the extent to which a reduction factor changes over a defined time range, the reduction factor being a factor that determines the degree to which a motor assistance is restricted, and the rate of change being selected in such a way that the reduction factor is decremented if a current speed is greater than a target speed and the reduction factor is incremented if the current speed is less than the target speed,
• adjusting (102) a currently prevailing reduction factor on the basis of the ascertained rate of change of the reduction factor, and
• applying (103) the adjusted reduction factor to a motor assistance ascertained for driving the motor (3), with a greater reduction factor leading to a greater motor assistance than a comparatively smaller reduction factor, wherein
• the reduction factor is limited to a minimum value of "0" and a maximum value of "1".

2. Method according to Claim 1, **characterized in that** the rate of change is ascertained on the basis of the current speed and a current acceleration.

3. Method according to Claim 2, **characterized in that** the rate of change is furthermore ascertained on the basis of further measured variables, in particular a slope, a maximum motor torque, a rider torque and/or a ground surface beneath the bicycle (1) identified by ground surface detection.

4. Method according to either of Claims 2 and 3, **characterized in that**
• the rate of change leads to faster decrementation of the reduction factor given the same acceleration with an increasing current speed, and
• the rate of change leads to faster decrementation of the reduction factor given the same speed with an increasing current acceleration.

5. Method according to Claims 2 to 4, **characterized in that**
• the rate of change is proportional to a difference between the current speed and a maximum assistance speed, or
• the rate of change is proportional to a current acceleration and proportional to the reciprocal difference between the current speed and a maximum assistance speed.

6. Method according to one of the preceding claims, **characterized in that** the possible values of the rate of change are limited to a predefined range.

7. Method according to one of the preceding claims, **characterized in that** the reduction factor is applied to, in particular multiplied by, in each case the smaller of a maximum permissible motor torque and a torque requested by a rider in order to ascertain a requested torque that is supposed to be provided by the motor.

8. Method according to one of the preceding claims, **characterized in that** the rate of change changes less significantly with a change of current speed in a predefined speed range around the target speed than for a speed above and/or below the speed range.

9. Method according to one of the preceding claims, **characterized in that**
• a maximum period of time over which a maximum speed may be exceeded is defined, and
• the rate of change is selected in such a way that the reduction factor is decremented such that the current speed drops below the maximum speed within the maximum period of time or the motor assistance drops to zero.

10. Apparatus for controlling a motor assistance provided by a motor (3) of an electric bicycle (1), comprising a control unit (2) configured to carry out the method according to one of the preceding claims.

11. Electric bicycle (1) having a motor (3) and an apparatus according to Claim 10.

## Revendications

1. Procédé (100) de commande d'une assistance motorisée fournie par un moteur (3) d'un vélo électrique (1), comprenant :
• la détermination (101) d'un taux de variation variable d'un facteur de réduction, lequel définit dans quelle mesure le facteur de réduction varie sur un intervalle de temps défini, le facteur de réduction étant un facteur qui détermine dans quelle mesure l'assistance motorisée est limitée, et le taux de variation étant choisi de manière à ce que le facteur de réduction soit décrémenté lorsque la vitesse actuelle est supérieure à une vitesse cible, et incrémenté lorsque la vitesse actuelle est inférieure à la vitesse cible,
• l'ajustement (102) d'un facteur de réduction actuel sur la base du taux de variation déterminé du facteur de réduction, et
• l'application (103) du facteur de réduction ajusté à une assistance motorisée déterminée pour commander le moteur (3), un facteur de réduction plus élevé entraînant une assistance motorisée plus élevée qu'un facteur de réduction comparativement plus faible, dans lequel
• le facteur de réduction est limité à une valeur minimale de « 0 » et à une valeur maximale de « 1 ».

2. Procédé selon la revendication 1, **caractérisé en ce que** le taux de variation est déterminé sur la base de la vitesse actuelle et d'une accélération actuelle.

3. Procédé selon la revendication 2, **caractérisé en ce que** le taux de variation est en outre déterminé sur la base d'autres grandeurs mesurées, notamment d'une pente, d'un couple moteur maximal, d'un couple exercé par le cycliste et/ou d'une nature du sol sur lequel roule le vélo (1), détectée par un système de détection du sol.

4. Procédé selon l'une des revendications 2 ou 3, **caractérisé en ce que**
• à accélération égale, le taux de variation entraîne une décrémentation plus rapide du facteur de réduction lorsque la vitesse actuelle augmente, et
• à vitesse égale, le taux de variation entraîne une décrémentation plus rapide du facteur de réduction lorsque l'accélération actuelle augmente.

5. Procédé selon l'une des revendications 2 à 4, **caractérisé en ce que**
• le taux de variation est proportionnel à une différence entre la vitesse actuelle et une vitesse maximale d'assistance, ou
• le taux de variation est proportionnel à l'accélération actuelle et à l'inverse de la différence entre la vitesse actuelle et une vitesse maximale d'assistance.

6. Procédé selon l'une des revendications précédentes, **caractérisé en ce que** les valeurs possibles du taux de variation sont limitées à un intervalle prédéfini.

7. Procédé selon l'une des revendications précédentes, **caractérisé en ce que** le facteur de réduction est appliqué à la plus faible des deux valeurs que sont un couple moteur maximal admissible et un couple demandé par un cycliste, notamment en étant multiplié par cette valeur, afin de déterminer un couple demandé devant être fourni par le moteur.

8. Procédé selon l'une des revendications précédentes, **caractérisé en ce que**, dans un intervalle de vitesse prédéfini autour de la vitesse cible, le taux de variation varie moins fortement en fonction d'une variation de la vitesse actuelle que lorsque la vitesse actuelle est supérieure et/ou inférieure à cet intervalle de vitesse.

9. Procédé selon l'une des revendications précédentes, **caractérisé en ce que**
• une durée maximale pendant laquelle une vitesse maximale peut être dépassée est définie, et
• le taux de variation est choisi de manière à ce que le facteur de réduction soit décrémenté de telle sorte que, pendant la durée maximale, la vitesse actuelle redescende en dessous de la vitesse maximale ou que l'assistance motorisée tombe à zéro.

10. Dispositif de commande d'une assistance motorisée fournie par un moteur (3) d'un vélo électrique (1), comprenant une unité de commande (2) conçue pour mettre en œuvre le procédé selon l'une des revendications précédentes.

11. Vélo électrique (1) comprenant un moteur (3) et un dispositif selon la revendication 10.
